# EUROPEAN PATENT SPECIFICATION

(11) **EP 2 897 401 B1**
(45) Date of publication and mention of the grant of the patent: **25.07.2018**
(21) Application number: 13837853.4
(22) Date of filing: 23.08.2013
(51) Int. Cl.: H04W 24/02

(54) **METHOD AND DEVICE FOR GUARANTEEING CONSISTENCY OF PLANNING DATA**
VERFAHREN UND VORRICHTUNG ZUR GEWÄHRLEISTUNG DER KONSISTENZ VON PLANUNGSDATEN
PROCÉDÉ ET DISPOSITIF PERMETTANT DE GARANTIR UNE COHÉRENCE DES DONNÉES DE PLANIFICATION

(30) Priority: 14.09.2012 CN 201210341559
(43) Date of publication of application: 22.07.2015
(73) Proprietor: ZTE Corporation, Shenzhen, Guangdong 518057 (CN)
(72) Inventor: LIU, Kangkang, Shenzhen Guangdong 518057 (CN); PAN, Chunjin, Shenzhen Guangdong 518057 (CN); ZHANG, Shihui, Shenzhen Guangdong 518057 (CN); JIANG, Bingxin, Shenzhen Guangdong 518057 (CN); MENG, Tian, Shenzhen Guangdong 518057 (CN); JIN, Haitao, Shenzhen Guangdong 518057 (CN)
(74) Representative: Chimini, Francesco
(86) International application number: PCT/CN2013/082214
(87) International publication number: WO 2014/040488

(56) References cited:
- WO-A1-02/33900
- WO-A2-02/23806
- WO-A2-2011/159842
- CN-A- 1 571 369
- CN-A- 101 802 815
- CN-A- 102 340 791
- CN-A- 102 857 949
- DE-A1- 19 813 754

## Description

### TECHNICAL FIELD

The present invention relates to wireless network technology, and in particular to a method and device for guaranteeing consistency of planning data.

### BACKGROUND

During network optimization, in many cases, the decrease of a Key Performance Indicator (KPI) of a network is mainly caused by inconsistency of a planning parameter and the parameter actually operated in network management. However, a large amount of parameters exist in the network, and it wastes time to check the parameters manually. Based on this, the prior art proposes the following algorithm for checking data consistency:
1. A method and system for realizing data consistency, wherein the system comprises a data collection module, a pre-processing module, a comparison module and a synchronization module; the data acquisition module being connected to a first network element device and a plurality of second network element devices so as to collect data information stored by the first network element device and various second network element devices; the pre-processing module processing the collected data information to be of a preset format; the comparison module comparing whether data information collected from the first network element device is consistent with data information collected from the second network element device according to data information which is processed to be of the preset format; and the synchronization module synchronizing data information in the first network element device and data information in the second network element device to be consistent data information. The technical solution may improve efficiency and accuracy of data consistency management, but a comparison result needs to be manually modified.
2. A method and system for keeping data consistency, wherein the method comprises the following steps of: comparing, by a coordination server, all version numbers with each other, and when two version numbers cannot be compared, determining a new version number according to an enforcing merging rule; and locally updating, by the coordination server, the version numbers and data corresponding thereto, and sending a data updating request, a new version number and corresponding data to various replica servers. The technical solution may accurately and efficiently guarantee data consistency in various servers, but needs to consider version numbers. WO 2011/159842 A2, WO 02/33900 A1 and WO 02/23806 A2 provide respective technical solutions; however, the above mentioned problem still remains unsolved.

### SUMMARY

The embodiments of the present invention provide a method and device for guaranteeing consistency of planning data, which can better solve the problem of guaranteeing the planning data to be consistent with network management data which is actually configured in network management.

According to one aspect of the present invention, a method for guaranteeing consistency of planning data is provided, comprising:
according to an actual configuration of a network, deriving network management data about an actual operation of the network;
converting the planning data into an intermediate file with the same format as that of the network management data; and
comparing the intermediate file with the network management data, and updating the network management data according to a comparison result to enable the planning data to be consistent with the network management data, wherein network planning is performed according to a network situation and a network planning rule so as to obtain the planning data with a preset template format; a configuration file is generated according to the preset template format, and the planning data is set according to the configuration file to obtain the intermediate file with the same format as that of the network management data; and the comparison result contains identification information for identifying data modification or data deletion.

Preferably, when the identification information is used for identifying data modification, the network management data is modified according to the planning data.

Preferably, when the identification information is used for identifying data deletion, the network management data is deleted.

According to another aspect of an embodiment of the present invention, a device for guaranteeing consistency of planning data is provided, the device comprising:
a data deriving component configured to derive network management data about an actual operation of a network according to an actual configuration of the network;
a data conversion component configured to convert the planning data into an intermediate file with a same format as that of the network management data; and
a data updating component configured to compare the intermediate file with the network management data, and update the network management data according to a comparison result to enable the planning data to be consistent with the network management data, wherein the comparison result contains identification information for identifying data modification or data deletion; the device further comprising a planning data generation component configured to perform network planning according to a network situation and a network planning rule to obtain the planning data with a preset template format; and wherein the data conversion component comprises:
   a configuration file generation sub-component configured to generate a configuration file according to the preset template format; and
   an intermediate file generation sub-component configured to set the planning data according to the configuration file to obtain the intermediate file with the same format as that of the network management data.

Preferably, the data updating component comprises:
a data comparison sub-component configured to compare the intermediate file with the network management data to obtain a comparison result with identification information, wherein the identification information is used for identifying data modification or data deletion; and
a comparison result application sub-component, configured to modify the network management data according to the planning data when the identification information is used for identifying data modification, and delete the network management data when the identification information is used for identifying data deletion.

As compared with the prior art, a beneficial effect of the embodiments of the present invention lies in: the embodiments of the present invention find the difference between planning data and network management data actually configured in network management by means of data comparison, and a comparison result with M (modification) and D (deletion) identification is activated in the network management, thereby guaranteeing the planning data to be consistent with data actually configured by the network management.

### BRIEF DESCRIPTION OF THE DRAWINGS

Fig. 1 is a diagram of a method for guaranteeing consistency of planning data according to an embodiment of the present invention;
Fig. 2 is a comparison flow diagram of guaranteeing consistency of planning data according to an embodiment of the present invention;
Fig. 3 is a planning data table provided in an embodiment of the present invention;
Fig. 4 is a whole-network parameter table derived from network management according to an embodiment of the present invention;
Fig. 5 is an intermediate file diagram table according to an embodiment of the present invention; and
Fig. 6 is a comparison result diagram table according to an embodiment of the present invention.

### DESCRIPTION OF EMBODIMENTS

The preferred embodiments of the present invention are further illustrated hereinafter in conjunction with the drawings, and it should be understood that the embodiments described herein are just to illustrate and explain, rather than limit the present invention.

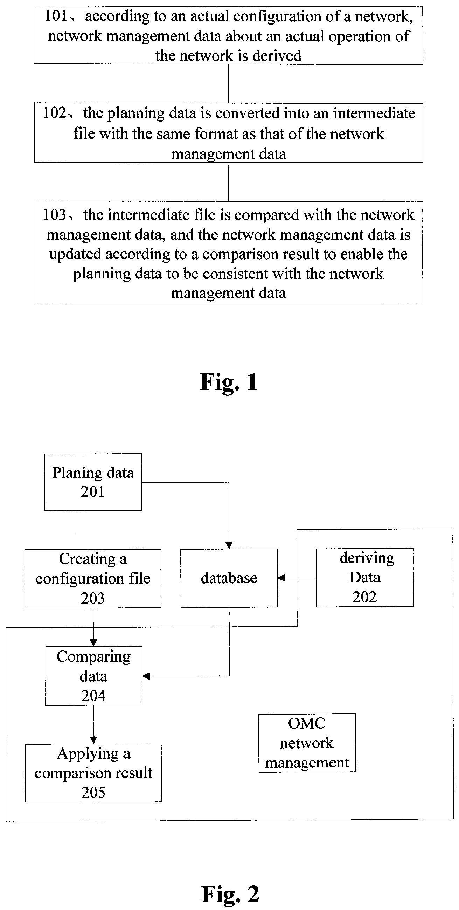

Fig. 1 is a diagram of a method for guaranteeing consistency of planning data according to an embodiment of the present invention, and as shown in Fig. 1, the method comprises the following steps.

Step 101, according to an actual configuration of a network, network management data about an actual operation of the network is derived.

Step 102, the planning data is converted into an intermediate file with the same format as that of the network management data.

The planning data is data with a preset template format, wherein the data is obtained through network planning which is performed according to a network situation and a network planning rule. In order to facilitate the comparison of planning data and the application of network management data after comparison, a configuration file is generated according to the preset template format, and the planning data is set according to the configuration file so as to obtain an intermediate file with the same format as that of the network management data.

Step 103, the intermediate file is compared with the network management data, and the network management data is updated according to a comparison result, so as to enable the planning data to be consistent with the network management data.

The comparison result contains identification information for identifying data modification or data deletion.

When the identification information is used for identifying data modification, the network management data is modified according to the planning data, and when the identification information is used for identifying data deletion, the network management data is deleted.

Fig. 2 is a comparison flow diagram of guaranteeing consistency of planning data according to an embodiment of the present invention, and as shown in Fig. 2, main steps are as follows.

Step 201, Planning data is performed.

Data planning is a necessary step in network operation, and planning data is a result of planning by a planning person according to actual situation of a network and relevant planning rules, which comprises parameter information which is necessary in network operation. In order to guarantee the network to be able to operate or relevant performance being normal after data issuing, maintenance and checking of the planning data are essential. The planning data is presented according to a certain template format, but the template format is not fixed, and adding or deleting operation may be performed according to practical situations.

Step 202, whole-network parameters are derived from network management
The whole-network parameters are network management data actually operated in a network, comprising relevant information about a ground parameter, wireless parameter and so on. Data deriving may be divided into being of a manual manner and an automatic manner:
1. The manual manner is that the network management parameter is derived to an preset catalogue by a user manually.
2. The automatic manner is that the network management parameter is derived automatically according to a condition set by the user, wherein the condition comprises setting a time point and frequency of data deriving a saving path, and a saving time, etc.

Step 203, a configuration file is created according to a template format.

The configuration file comprises a major key and information about an initial row and column needed in comparison, and the setting rule thereof is related to the format of planning data, which is a prerequisite for guaranteeing the correction of a comparison result.

Step 204, a comparison is realized.

Steps of realizing comparison are as follows:
1. Data checking
   It is checked whether the planning data can be found in data derived from the network management using the major key provided in a configuration file, If the planning data is found, step 2 is performed, and if the planning data is not found, a user is prompted whether to perform comparison, and if so, turn to step 2, otherwise exit the comparison.
2. Planning data is set according to the configuration file, and an intermediate file is generated according to a data format derived from network management.
3. The intermediate file is compared with whole-network parameters derived from the network management. When in comparison, there are two comparison manners as follows:
   1) Manual comparison, i.e. a user manually performing data comparison.
   2) Automatic comparison, i.e. the user appointing a comparison task, setting a time point of comparison, an object of comparison and a saving path of a comparison result, etc., that is, comparison may be completed automatically according to the set task situation.

Step 205, Comparison result is activated.

The comparison result is output according to a data format derived from network management, and a data modification operation may be performed through parameter batch modification function of network management. The identification bit of the comparison result comprises two types of M (modification) and D (deletion); when network management data is inconsistent with planning data, the identification bit is M, indicating needing to modify network management data into values in the planning data; when the management data cannot be found in the planning data, the identification bit is D, indicating that data in the network management cannot be found in planning data, and the network management data needs to be deleted.

The comparison result has two options:
1) Manual activating, i.e. a user manually activating a comparison result.
2) Automatic activating, i.e. a system automatically activating a comparison result.

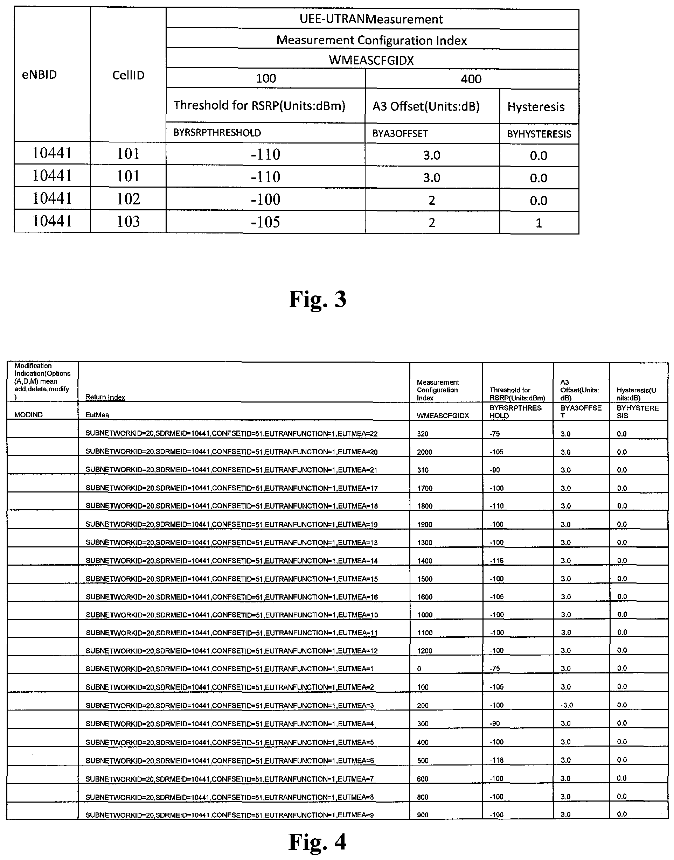

The following results in specific operation instances of Fig. 3 to Fig. 6 further describe the embodiments of the present invention.
1. Planning data table is formulated, and the specific flow is as shown in Fig. 3.
   A first row indicates a name of a sheet page, such as UEE-UTRAN Measurement, and the value of the name needs to be consistent with the name of the sheet page in a whole-network parameter table derived from network management, otherwise it causes that a corresponding sheet page cannot be found when generating an intermediate file.
   A second row and a third row indicate a major key of the table, such as Measurement Configuration Index and WMEASCFGIDX, wherein the third row is a short name which is served as the major key when in comparison, while the second row is the full name corresponding to the short name in the third row, and is merely for viewing.
   A fourth row is a value under the major key.
   A fifth row and a sixth row are objects needing to be compared, and when in comparison, the sixth row would be searched. In addition, the fifth row is the full name corresponding to the sixth row, and is merely for viewing.
   Parameters of rows, columns or a major key operation may be added in the table according to practical situations so as to be applied to different requirements of all external fields.
2. A whole-network parameter table is derived from network management, i.e. a network management data table, as shown in Fig. 4, the table being actual data configuration derived from a whole network. In order to guarantee the efficiency of comparison, the sheet page existing in a planning data table may be only derived, such as UEE-UTRANMeasurement.
3. A configuration file is modified according to practical situations, and the configuration file being *.ini file, as follows:

### [Default]

SheetNameRow=1 indicates that the first row of data table indicates the name of a sheet page in data derived from network management;
TitleRow=6 indicates that the sixth row of data table indicates a field name in data derived from the network management;
DataBeginRow=7 indicates the seventh row of the data table is a data initialization row;
DataBeginCol=3 indicates that a third column of the data table is a data initialization column;
and DefaultKeyCol=2 indicates a default major key column when the network management background derives data and performs comparison; and DefaultExtract=SDRMEID indicates a field name of eNBID in a default major column of data derived from the network management.

[Synonym] identifies a corresponding relationship bwtween a major key field of a data table and data derived from the network management.
CellID=WCID
eNBID=SDRMEID

[TableName] indicates a default name of a sheet page, which must be consistent with this
Key=eNB commission data table
[UEE-UTRANMeasurement] indicates the major key of the table being eNBID Key=eNBID

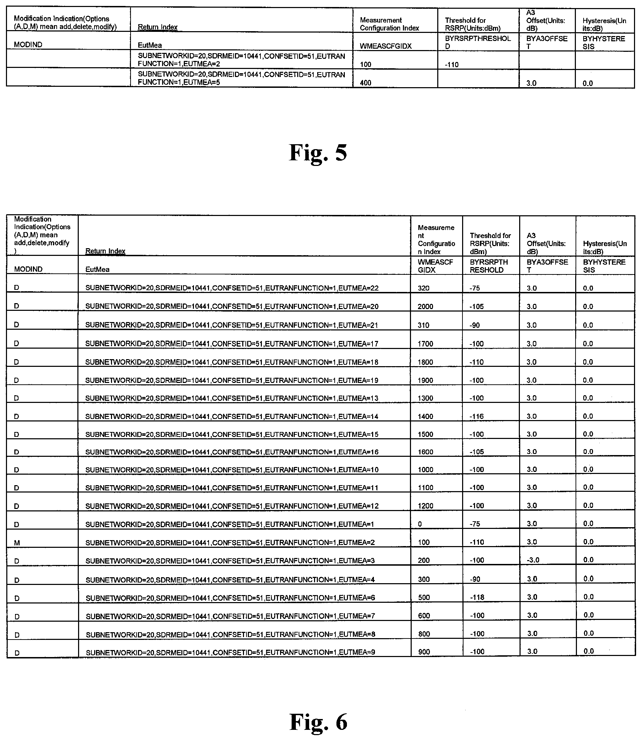

In the configuration file [Default], a user may modify initial row and column of data according to practical situations; when there are a plurality of sheet pages needing comparison, merely a corresponding field needs to be added in the configuration file and the major key of the present sheet page needs to be noted, such as UEE-UTRANMeasurement.
4. the intermediate file is internally generated, and is as shown in Fig. 5.
5. The comparison result is as shown in Fig. 6, and a format of the comparison result is the same as that of a table derived from network management, and the comparison result may be directly imported in the network management for activation, and the operation type is determined through the identification bit D or M.

An embodiment of the present invention further provides a device for guaranteeing consistency of planning data, the device comprising a data deriving component, a data conversion component, a data updating component and a planning data generation component, wherein the data conversion component comprises a configuration file generation sub-component and an intermediate file generation sub-component, and the data updating component comprises a data comparison sub-component and a comparison result application sub-component.

The data deriving component derives network management data about an actual operation of a network according to an actual configuration of the network. The planning data generation component performs network planning according to a network situation and a network planning rule to obtain planning data with a preset template format. The data conversion component uses its file generation sub-component to generate the configuration file according to the preset template format, and uses its intermediate file generation sub-component to set planning data according to the configuration file to obtain an intermediate file with the same format as that of network management data, that is, the planning data is converted into the intermediate file with the same format as that of the network management data so as to facilitate data comparison and data application. The data updating component uses its data comparison sub-component to compare the intermediate file with the network management data so as to obtain a comparison result with identification information, which is used for identifying data modification or data deletion, and uses its comparison result application sub-component to modify the network management data according to the planning data when the identification information indicates to modify data; when the identification information indicates to delete data, the network management data is deleted so as to enable the planning data to be consistent with the network management data.

In summary, the embodiments of the present invention have the technical effects as follows.

The usage of the embodiments of the present invention can guarantee the consistency of the planning data and data actually configured in network management, thereby guaranteeing the performance reliability of the network during operation, and avoiding the problem of failing to quickly and correctly locate when performance data is declined.

Although the above text describes the present invention in detail, the present invention is not limited to this, and a person skilled in the art may perform various modifications according to principles of the present invention. Therefore, any modification made according to the present invention shall fall within the protection scope of the present invention as defined in the appended claims.

### Industrial Applicability

As stated above, a method and device for guaranteeing consistency of planning data provided in the embodiments of the present invention have the following beneficial effects: the difference between planning data and network management data actually configured in network management is found by means of data comparison, and a comparison result with M (modification) and D (deletion) identification is activated in the network management, thereby guaranteeing the planning data to be consistent with data actually configured by the network management.

## Claims

1. A method performed by a device for guaranteeing consistency of planning data, **characterized by** comprising:
according to an actual configuration of a network, deriving network management data about an actual operation of the network (101);
converting the planning data into an intermediate file, wherein a format of the intermediate file is the same as a format of the network management data (102); and
comparing the intermediate file with the network management data, and updating the network management data according to a comparison result to enable the planning data to be consistent with the network management data (103);
wherein the comparison result contains identification information for identifying data modification or data deletion;
wherein:
- network planning is performed according to a network situation and a network planning rule to obtain the planning data with a preset template format;
- a configuration file is generated according to the preset template format (203), and the planning data is set according to the configuration file to obtain the intermediate file with the same format as the format of the network management data.

2. The method according to claim 1, wherein when the identification information is used for identifying data modification, the network management data is modified according to the planning data.

3. The method according to claim 1, wherein when the identification information is used for identifying data deletion, the network management data is deleted.

4. A device for guaranteeing consistency of planning data, **characterized by** comprising:
a data deriving component configured to derive network management data about an actual operation of a network according to an actual configuration of the network;
a data conversion component configured to convert the planning data into an intermediate file, wherein a format of the intermediate file is the same as a format of the network management data; and
a data updating component configured to compare the intermediate file with the network management data, and update the network management data according to a comparison result to enable the planning data to be consistent with the network management data, wherein the comparison result contains identification information for identifying data modification or data deletion;
the device further comprising a planning data generation component configured to perform network planning according to a network situation and a network planning rule to obtain the planning data with a preset template format;
and wherein the data conversion component comprises: a configuration file generation sub-component configured to generate a configuration file according to the preset template format; and an intermediate file generation sub-component configured to set the planning data according to the configuration file to obtain the intermediate file with the same format as that of the network management data.

5. The device according to claim 4, wherein the data updating component comprises:
a data comparison sub-component configured to compare the intermediate file with the network management data to obtain a comparison result with identification information, wherein the identification information is used for identifying data modification or data deletion; and
a comparison result application sub-component configured to modify the network management data according to the planning data when the identification information is used for identifying data modification, and delete the network management data when the identification information is used for identifying data deletion.

## Patentansprüche

1. Verfahren, das von einer Vorrichtung zum Gewährleisten der Konsistenz von Planungsdaten durchgeführt wird, **dadurch gekennzeichnet, dass** es umfasst:
gemäß einer tatsächlichen Konfiguration eines Netzwerks Ableiten von Netzwerkverwaltungsdaten über einen tatsächlichen Betrieb des Netzwerks (101);
Umwandeln der Planungsdaten in eine Zwischendatei, wobei ein Format der Zwischendatei dasselbe wie ein Format der Netzwerkverwaltungsdaten (102) ist; und
Vergleichen der Zwischendatei mit den Netzwerkverwaltungsdaten und Aktualisieren der Netzwerkverwaltungsdaten gemäß einem Vergleichsergebnis, um zu ermöglichen, dass die Planungsdaten mit den Netzwerkverwaltungsdaten (103) konsistent sind;
wobei das Vergleichsergebnis Identifikationsinformationen zum Identifizieren von Datenänderungen oder Datenlöschungen enthält;
wobei:
- die Netzwerkplanung entsprechend einer Netzwerksituation und einer Netzwerkplanungsregel durchgeführt wird, um die Planungsdaten mit einem voreingestellten Vorlagenformat zu erhalten;
- eine Konfigurationsdatei entsprechend dem voreingestellten Vorlagenformat (203) erzeugt wird und die Planungsdaten entsprechend der Konfigurationsdatei eingestellt werden, um die Zwischendatei mit demselben Format wie das Format der Netzwerkverwaltungsdaten zu erhalten.

2. Verfahren nach Anspruch 1, wobei bei Verwendung der Identifikationsinformationen zum Identifizieren von Datenänderungen die Netzwerkmanagementdaten entsprechend den Planungsdaten geändert werden.

3. Verfahren nach Anspruch 1, wobei bei Verwendung der Identifikationsinformationen zum Identifizieren von Datenlöschungen die Netzwerkverwaltungsdaten gelöscht werden.

4. Vorrichtung zur Gewährleistung der Konsistenz von Planungsdaten, **dadurch gekennzeichnet, dass** sie umfasst:
eine Datenableitungskomponente, die eingerichtet ist, Netzwerkverwaltungsdaten über einen tatsächlichen Betrieb eines Netzwerks gemäß einer tatsächlichen Konfiguration des Netzwerks abzuleiten;
eine Datenumwandlungskomponente, die eingerichtet ist, die Planungsdaten in eine Zwischendatei umzuwandeln, wobei ein Format der Zwischendatei dasselbe wie ein Format der Netzwerkverwaltungsdaten ist; und
eine Datenaktualisierungskomponente, die eingerichtet ist, die Zwischendatei mit den Netzwerkverwaltungsdaten zu vergleichen und die Netzwerkverwaltungsdaten gemäß einem Vergleichsergebnis zu aktualisieren, um zu ermöglichen, dass die Planungsdaten mit den Netzwerkverwaltungsdaten konsistent sind, wobei das Vergleichsergebnis Identifikationsinformationen zum Identifizieren von Datenänderungen oder Datenlöschungen enthält;
wobei die Vorrichtung ferner eine Planungsdatenerzeugungskomponente umfasst, die eingerichtet ist, eine Netzwerkplanung gemäß einer Netzwerksituation und einer Netzwerkplanungsregel durchzuführen, um die Planungsdaten mit einem voreingestellten Vorlagenformat zu erhalten;
und wobei die Datenumwandlungskomponente umfasst: eine Teilkomponente zur Erstellung von Konfigurationsdateien, die eingerichtet ist, eine Konfigurationsdatei gemäß dem voreingestellten Vorlagenformat zu erstellen; und eine Teilkomponente zur Erstellung von Zwischendateien, die eingerichtet ist, die Planungsdaten gemäß der Konfigurationsdatei einzustellen, um die Zwischendatei mit demselben Format wie das der Netzwerkverwaltungsdaten zu erhalten.

5. Verfahren nach Anspruch 4, wobei die Datenaktualisierungskomponente umfasst:
eine Teilkomponente zum Vergleich von Dateien, die eingerichtet ist, die Zwischendatei mit den Netzwerkverwaltungsdaten zu vergleichen, um ein Vergleichsergebnis mit Identifikationsinformationen zu erhalten, wobei die Identifikationsinformationen zum Identifizieren von Datenänderungen oder Datenlöschungen verwendet werden; und
eine Teilkomponente zur Anwendung von Vergleichsergebnissen, die eingerichtet ist, die Netzwerkverwaltungsdaten gemäß den Planungsdaten zu ändern, wenn die Identifikationsinformationen zum Identifizieren von Datenänderungen verwendet werden, und die Netzwerkverwaltungsdaten zu löschen, wenn die Identifikationsinformationen zum Identifizieren von Datenlöschungen verwendet werden.

## Revendications

1. Procédé effectué par un dispositif pour garantir la cohérence des données de planification, **caractérisé en ce qu'**il consiste à :
selon une configuration réelle d'un réseau, dériver des données de gestion de réseau concernant un fonctionnement réel du réseau (101) ;
convertir les données de planification en un fichier intermédiaire, dans lequel un format du fichier intermédiaire est identique à un format des données de gestion de réseau (102) ; et
comparer le fichier intermédiaire aux données de gestion de réseau et mettre à jour les données de gestion de réseau en fonction d'un résultat de comparaison pour permettre aux données de planification d'être cohérentes avec les données de gestion de réseau (103) ;
dans lequel le résultat de comparaison contient des informations d'identification pour identifier une modification de données ou une suppression de données ;
dans lequel :
- la planification de réseau est effectuée en fonction d'une situation de réseau et d'une règle de planification de réseau pour obtenir les données de planification avec un format de modèle prédéfini ;
- un fichier de configuration est généré selon le format de modèle prédéfini (203) et les données de planification sont définies en fonction du fichier de configuration pour obtenir le fichier intermédiaire avec le même format que le format des données de gestion de réseau.

2. Procédé selon la revendication 1, dans lequel, lorsque les informations d'identification sont utilisées pour identifier une modification de données, les données de gestion de réseau sont modifiées en fonction des données de planification.

3. Procédé selon la revendication 1, dans lequel, lorsque les informations d'identification sont utilisées pour identifier une suppression de données, les données de gestion de réseau sont supprimées.

4. Dispositif pour garantir la cohérence de données de planification, **caractérisé en ce qu'**il comprend :
un composant de dérivation de données configuré pour dériver des données de gestion de réseau concernant un fonctionnement réel d'un réseau conformément à une configuration réelle du réseau ;
un composant de conversion de données configuré pour convertir les données de planification en un fichier intermédiaire, dans lequel un format du fichier intermédiaire est le même qu'un format des données de gestion de réseau ; et
un composant de mise à jour de données configuré pour comparer le fichier intermédiaire aux données de gestion de réseau et mettre à jour les données de gestion de réseau selon un résultat de comparaison pour permettre aux données de planification d'être cohérentes avec les données de gestion de réseau, dans lequel le résultat de comparaison contient des informations d'identification pour identifier la modification de données ou la suppression de données ;
le dispositif comprenant en outre un composant de génération de données de planification configuré pour effectuer une planification de réseau conformément à une situation de réseau et à une règle de planification de réseau pour obtenir les données de planification avec un format de modèle prédéfini ;
et dans lequel le composant de conversion de données comprend : un composant secondaire de génération de fichier de configuration configuré pour générer un fichier de configuration selon le format de modèle prédéfini ; et un composant secondaire de génération de fichier intermédiaire configuré pour définir les données de planification en fonction du fichier de configuration pour obtenir le fichier intermédiaire avec le même format que celui des données de gestion de réseau.

5. Procédé selon la revendication 4, dans lequel le composant de mise à jour de données comprend :
un composant secondaire de comparaison de données configuré pour comparer le fichier intermédiaire aux données de gestion de réseau pour obtenir un résultat de comparaison avec des informations d'identification, dans lequel les informations d'identification sont utilisées pour identifier une modification de données ou une suppression de données ; et
un composant secondaire d'application de résultat de comparaison configuré pour modifier les données de gestion de réseau selon les données de planification lorsque les informations d'identification sont utilisées pour identifier une modification de données et supprimer les données de gestion de réseau lorsque les informations d'identification sont utilisées pour identifier une suppression de données.
